# EUROPEAN PATENT APPLICATION

(11) **EP 2 490 107 A1**
(43) Date of publication of application: **22.08.2012**
(21) Application number: 10823512.8
(22) Date of filing: 23.02.2010
(51) Int. Cl.: G06F 3/041, G06F 3/048

(54) **MULTI-TOUCH TYPE INPUT CONTROLLING SYSTEM**

(30) Priority: 12.10.2009 KR 20090096999
(71) Applicant: Laonex Co., Ltd., Gyeonggi-do 443-702 (KR)
(72) Inventor: SHIN, Geun-Ho, Suwon-si Gyeonggi-do 443-702 (KR)
(74) Representative: Hoefer & Partner
(86) International application number: PCT/KR2010/001122
(87) International publication number: WO 2011/046270

(57) **Abstract**

A multi-touch input control system includes: a touch input unit having a multi-touch-type touch input surface which recognizes one or more touch points at the same time, generating the coordinates of one or more touch points inputted through the touch input surface, and transmitting touch information containing the coordinate information; and a computing unit receiving the touch information from the touch input unit, setting one of preset control modes according to the number of touch points, selecting a control command among control commands contained in the set control mode in correspondence to a variation in the number of touch points and a coordinate variation, and generating a control signal corresponding to the control command to performing internal control processing.

## Description

### CROSS-REFERENCE(S) TO RELATED APPLICATIONS

The present application claims priority of Korean Patent Application No. 10-2009-0096999, filed on October 12, 2009, which is incorporated herein by reference in its entirety.

### Field of the Invention

The present invention relates to a multi-touch input control technology, and more particularly, to a multi-touch input control technology in which a user selects a specific control mode by touching one or more positions through a touch input surface capable of detecting a multi-touch, and performs various control operations in a computing device, such as cursor movement, mouse click, screen control, character input, and individual control within an application program, through a subsequent touch operation.

### Background Art

More and more mobile devices, such as mobile phones, MP3 players, PMP, and PDA, as well as personal computers and notebook computers include a touch input unit, such as a touch screen or touch pad, which serves as an input unit substituting for an existing keyboard and mouse.

When an input unit of a computing device is implemented in a touch manner, separate mechanical buttons are not provided, but only a touch screen is provided. Therefore, the touch screen may serve as a screen display unit and an input unit, and various menu buttons may be displayed on the touch screen such that a user touches a menu button to execute a corresponding command. Accordingly, it is possible to increase the space efficiency of the computing device.

Recently, a multi touch screen has been adopted to provide a function through which a user may conveniently control a computing device by using two fingers.

However, when a touch screen having both a screen display function and an input function is not used, but a touch pad having only an input function is used, there is a limit to selecting various types of inputs. Even when a touch screen is used, menus displayed on the screen need to be discriminated and touched. Therefore, the touch feeling is worse than that of mechanical buttons. Accordingly, it is highly likely that an error occurs in the user's input.

### DISCLOSURE OF INVENTION

### Technical Problem

The present invention is directed to a multi-touch input control system which is capable of performing various inputs required for controlling an electronic device having a computing function only through a user's touch operation, without using a separate input unit.

### Technical Solution

According to an embodiment of the present invention, an multi-touch input control system includes: a touch input unit having a multi-touch-type touch input surface which recognizes one or more touch points at the same time, generating the coordinates of one or more touch points inputted through the touch input surface, and transmitting touch information containing the coordinate information; and a computing unit receiving the touch information from the touch input unit, setting one of preset control modes according to the number of touch points, selecting a control command among control commands contained in the set control mode in correspondence to a variation in the number of touch points and a coordinate variation, and generating a control signal corresponding to the control command to performing internal control processing.

The computing unit may include: a transmission interface forming an information transmission path between the touch input unit and the computing unit according to any one standard of wired transmission, wireless transmission, and data input and output through an internal line; a general agent having information on the control modes containing one or more control commands, receiving the touch information of the touch input unit through the transmission interface, determining the number of touch points from the touch information, selecting one of the control modes according to the number of touch points, and generating a control signal corresponding to a control command contained in the selected control mode according to the variation in the number of touch points and the coordinate variation; and a control module receiving the control signal from the general agent, performing internal control processing, and displaying the processing result on a screen.
The control mode may include a cursor movement control mode containing control commands related to a cursor movement and a mouse left/right click. When the number of touch points is a predetermined number (hereinafter, referred to a first number), the general agent may set the control mode to the cursor movement control mode. When a touch point additionally occurs in the left or right side from the touch points in the cursor movement control mode, the general agent may recognize the touch as a control command of the mouse left or right click, and generates a corresponding control signal.
When a touch point additionally occurs in a state in which an object on the screen is selected, the general agent may generate a control signal corresponding to a control command for copying, cutting, or pasting the selected object according to the movement direction of the touch point.
The control mode may include a screen control mode containing control commands related to upward/downward or left/right screen scroll and page transition. When the number of touch points is a predetermined number (hereinafter, referred to as a second number), the general agent may set the control mode to a screen control mode, detects a state in which the touch state of the touch points is maintained in a limited range for a predetermined time in the screen control mode (hereafter, referred to as a long-press touch), and select any one of the screen scroll and the page transition depending on when the long-press touch occurs or not. When the touch points are moved in the upward/downward or left/right direction, the general agent may recognize the movement as a control command for the selected one of the screen scroll and the page transition, and generate a corresponding control signal.
The control mode may include a character input control mode containing commands related to character input. When the number of touch points is a predetermined number (hereafter, referred to as a fourth number), the general agent may set the control mode to a character input control mode, select the language type of input characters in correspondence to an upward/downward or left/right movement of the touch points in the character input control mode, recognize inputs of individual characters according to predefined types of touch operations and a character table, and generates a corresponding control signal.
The control mode may include a window control mode containing commands for controlling a window displaying a screen on which a program is executed. When the number of touch points is a predetermined number, the general agent may set the control mode to the window control mode. When a touch corresponding to the third number is inputted, the general agent may display a minimize button, a maximize button, and a close button which are matched with the touch corresponding to the third number and are the system menu of the window. When one button in the system menu of the window is selected by an additional touch input, the general agent may generate a control signal corresponding to the selected button.
The control modes may include a character input control mode for inputting a character through a character input interface displayed on the touch input unit, and the general agent may generate a control signal to move a mouse cursor from a position at which the touch point leaves a character input permission range within a character recognition region.
The computing unit may include: one or more application programs individually added and having one or more control commands which are defined thereby; and one or more special agents individually added in correspondence to the application programs, having information on predefined touch operations in correspondence to the control commands of the application programs, receiving the touch information of the touch input unit through the transmission interface when driven by the control module, analyzing the received touch information, generating a control signal corresponding to the control command of the application program, and providing the generated control signal to the control module. The control module may receive the touch information of the touch input unit through the transmission interface, and determine the number of touch points from the touch information. When the number of touch points is a predetermined number (hereinafter, referred to as a third number), the control module may select one of the application programs according to the movement direction of the touch points, set the control mode to the application program control mode, drive a special agent corresponding to the selected application program, receive a control signal fro the special agent to perform internal control processing, and display the processing result on the screen.
When a long-press touch corresponding to the third number is detected, the control module may display a list of currently-executed application programs on the screen, move an application program to be selected from the application program list in correspondence to a movement of the touch points. When the touch is separated, the currently-selected application program is executed, and a special agent corresponding to the selected application program may be driven.
When a touch corresponding to the fourth number occurs in any one control mode among the cursor movement control mode, the screen control mode, the application program control mode, and the character input control mode, the control module may return to the initial state in which an arbitrary control mode may be selected.

### Advantageous Effects

According to the embodiment of the present invention, it is possible to perform various inputs required for controlling an electronic device having a computing function only through a user's touch operation, without using a separate input unit.

Furthermore, as the touch operations corresponding to the respective control commands are divided and arranged effectively, a user may perform input control conveniently. Application programs and agents corresponding to the application programs may be added, and the control commands within the application programs may be carried out by a user's touch operation.

Furthermore, when the touch input unit is separately provided and implemented in a wireless remote control type, the entire system may be conveniently carried while the input control is performed in various manners.

### Brief Description of the Drawings

FIG. 1 is a configuration diagram of a multi-touch input control system according to an embodiment of the present invention.

FIG. 2 is a diagram showing operation examples in a plurality of control modes.

FIG. 3 is a diagram showing an operation example in which a cursor movement control mode is selected by a one-finger touch.

FIG. 4 is a diagram showing another operation example of the cursor movement control mode FIG. 3.

FIG. 5 is a diagram showing an operation example in which a screen control mode is selected by a two-finger touch.

FIG. 6 is a diagram showing an operation example in which a window control mode is used to maximize the size of a window.

FIG. 7 is a diagram showing an operation example in which the window control mode is used to minimize the size of the window.

FIG. 8 is a diagram showing an operation example in which the window control mode is used to control the size of the window.

FIG. 9 is a diagram showing an operation example in which a window displaying a screen on which a program is being executed is moved along a touch input.

FIG. 10 is a diagram showing an operation example in which a basic program control mode is selected by a three-finger touch.

FIG. 11 is a diagram showing an operation example in which a list of basic programs which are being executed is displayed by a long-press touch and a basic program is selected by a touch movement and release operation.

FIG. 12 is a diagram showing an operation example in which a window for selecting functions defined in function keys F1 to F12 is displayed when touch points are dragged in the left direction of FIG. 10.

FIG. 13 is a diagram showing an operation example in which one of currently-installed application programs is selected and executed to enter the application program control mode, when the touch points are dragged in the upward direction of FIG. 10.

FIG. 14 is a diagram showing an operation example in which a character input control mode is selected by a four-finger touch.

FIG. 15 is a diagram showing a user interface in which an alphabet is selected by a touch operation using three fingers, after English is selected in the character input control mode of FIG. 14.

FIG. 16 is a diagram showing a state in which a touch is inputted to the touch input unit.

FIG. 17 is a diagram showing a process in which a keyboard input is performed through a touch input.

FIG. 18 is a diagram showing a process in which a mouse input is performed through a touch input.

FIG. 19 is a diagram showing a case in which a touch input corresponding to the second number occurs on a character input interface.

FIG. 20 is a diagram showing a case in which a touch input corresponding to the third number occurs on the character input interface.

### Embodiment for Carrying Out the Invention

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

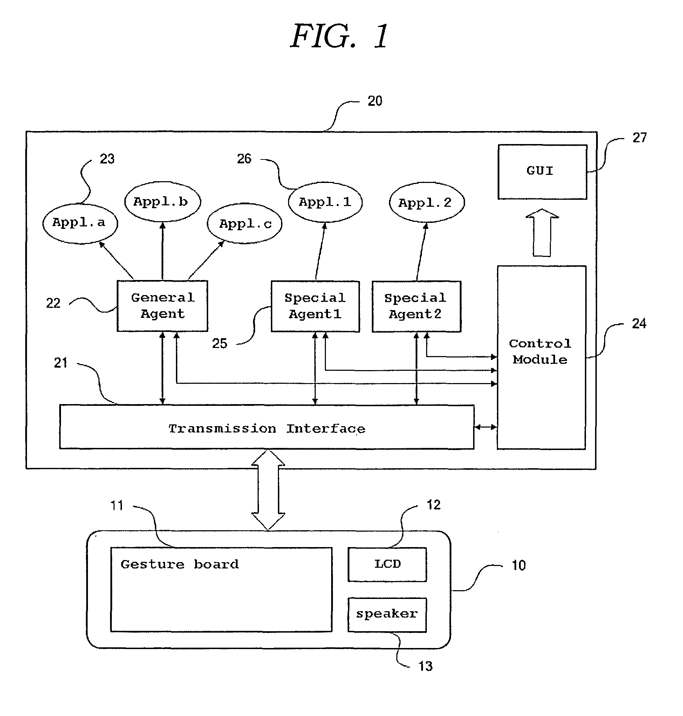

FIG. 1 is a configuration diagram of a multi-touch input control system according to an embodiment of the present invention.

The multi-touch input control system according to the embodiment of the present invention includes a touch input unit 10 and a computing unit 20. The touch input unit 10 and the computing unit 20 may be provided inside one device or provided separately from each other. That is, the multi-touch input control system according to the embodiment of the present invention may be implemented as a single device or a plurality of devices which are separated in a wired or wireless manner.

The touch input unit 10 includes a multi touch input surface 11 capable of recognizing one or more touch positions at the same time. At this time, the touch input surface 11 may include a touch pad having no display function or a touch screen having a display function. When the touch input surface 11 is implemented in a touch pad type, the touch input unit 10 may be reduced in size. In this case, the touch input unit 10 may be manufactured in such a remote control type as to be easily separated and carried. Furthermore, the touch input unit 10 may be implemented as one device integrated with the computing unit 20, and the touch input surface 11 may be implemented as a touch screen corresponding to a screen display section of the computing unit 20.

The touch input unit 10 generates the coordinates of one or more touch points inputted through the touch input surface 11. For example, when a user touches two points by using two fingers, two corresponding coordinates are generated.

Furthermore, the touch input unit 10 generates touch information including the coordinate information of the touch points and transmits the generated touch information to the computing unit 20. The generation of the coordinates of the touch points and the transmission of the touch information may be performed in a real time basis within a very short time.

The touch input unit 10 may include a state display section 12 and a speaker 13 which inform a user of how a control mode is operated in the computing unit 20 through visual and auditory information. At this time, the information on the current control mode is received from the computing unit 20.

When receiving the touch information from the touch input unit 10, the computing unit 20 analyzes the received touch information and generates a control signal for processing internal control. At this time, the computing unit 20 may include any electronic devices having a basic processor mounted thereon, as well as a desktop computer or notebook computer. Therefore, the computing unit 20 may be applied to various portable electronic devices such as mobile phones, MP3 players, and PMP.

The computing unit 20 may operate in a plurality of control modes. The plurality of control modes include (1) cursor movement control mode, (2) screen control mode, (3) basic program control mode, (4) character input mode, (5) window control mode, and (6) application program control mode. Each of the control modes includes one or more control commands. The character input control mode may be activated by touching a predetermined number of touch points or inputting a predetermined activation key for the character input control mode. The character input control mode will be described below in detail with reference to the drawings. Furthermore, the application program control mode has a distinct characteristic from the other four control modes. This will be described below in detail.

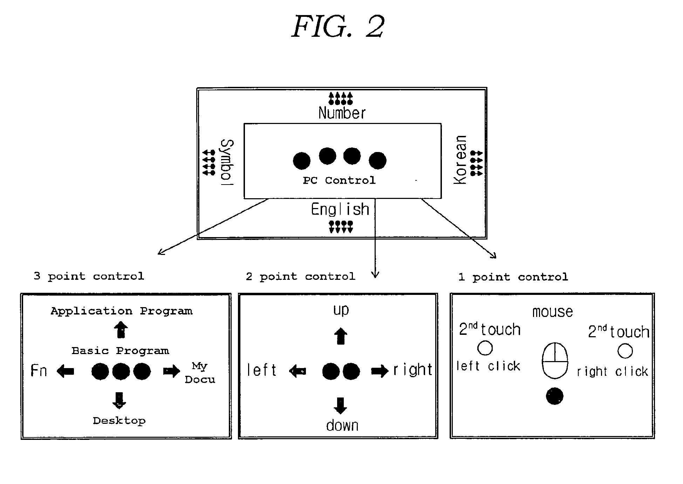

The selection of each control mode and the selection of control commands in the control mode may be performed by a touch operation through the touch input unit 10. More specifically, the selection of each control mode is performed according to the number of touch points, and the selection of the control commands in the control mode is performed according to a variation in the number of touch points and a coordinate variation. FIGS. 2 to 20 are diagrams explaining the operations of the respective control modes in more detail, and the respective control modes will be described below in more detail.

The computing unit 20 includes a transmission interface 21, a general agent 22, a basic program 23, a control module 24, a special agent 25, an application program 26, and a graphic user interface (GUI) 27. At this time, a plurality of special agents 25 and a plurality of application programs 26 may be additionally provided.

The transmission interface 21 forms an information transmission path between the touch input unit 10 and the computing unit 20 according to any one standard among wired transmission, wireless transmission, and data input/output through an internal line. That is, the touch input unit 10 transmits the touch information including the coordinate information of the touch points to the transmission interface 21, and the transmission interface 21 transmits the information on the current control mode to the touch input unit 10.

The transmission standard of the transmission interface 21 may include a wire line standard such as the universal serial bus (USB) and a wireless standard such as radio frequency (RF) or ZigBee. Furthermore, when the touch input unit 10 and the computing unit 20 are integrated as one device, the transmission interface 21 may simply serve as a path for data input/output between two components.

The general agent 22 includes information on the cursor control mode, the screen control mode, the basic program control mode, the window control mode, and the character input control mode. The general agent 22 receives the touch information of the touch input unit 10 through the transmission interface 21, determines the number of touch points from the received touch information, and selects the corresponding control mode according to the number of touch points. For example, when the number of touch points is one, the cursor movement control mode may be set. When the number of touch points is two, the screen control mode may be set. When the number of touch points is three, the basic program control mode may be set. When the number of touch points is four, the character input control mode may be set. Furthermore, when the number of touch points is two or three, the character input control mode may be set. However, the setting examples for the respective control modes are not limited to the embodiment of the present invention.

After the control mode is selected, the general agent 22 generates a control signal by matching a variation in the number of touch points or a coordinate variation with a control command included in the selected control mode. For example, when the touch point is moved in the cursor movement control mode, the general agent 22 recognizes this movement as a cursor movement command. Furthermore, when an additional touch occurs, the general agent 22 recognizes this touch as a mouse click command, and generates a control command. The method for matching a touch operation and a control command may be implemented in various manners. For example, a keyboard shortcut corresponding to the control command may be matched with a touch operation.

The basic program 23 is operated by the general agent 22, and corresponds to a program which is dependent on an operating system (OS) and is basically provided. Therefore, a control command system provided by the OS is substantially reflected into the basic program 23.

The control module 24 is a component corresponding to a CPU, a processor, or a microcomputer, and performs internal control according to a control signal received from the general agent 22 or the special agent 25. That is, the general agent 22 and the special agent 25 only analyze the touch information generated by the touch input unit 22 into a control command. Therefore, the control module 24 provided in the computing unit 20 performs a control operation according to the control command.

The control module 24 provides a processing result based on the internal control operation to the GUI 27 to display the processing result on the screen. This display operation corresponds to a general operation of a computing device including a screen display unit such as a monitor.

As described above, one or more application programs may be provided. Each of the application programs 26 may include one or more control commands which are defined for itself. That is, the application program 26 may include a different control command system from the control commands provided by the OS.

At this time, the application programs 26 are operated in the application program control mode, and the special agent 25 analyzes a touch operation in the application program control mode into a control command of the corresponding application program 26.

As described above, a plurality of special agents 25 may be provided in correspondence to the respective application programs 26. Each of the special agents 25 include information on predetermined touch operations corresponding to the control commands of the application program 26. That is, the special agent 25 corresponding to each of the application programs 26 may be provided.

The special agent 25 receives the touch information of the touch input unit 10 through the transmission interface 21, analyzes the received touch information, and generates a control signal corresponding to the control command of the application program 26 according to the predetermined touch operation.

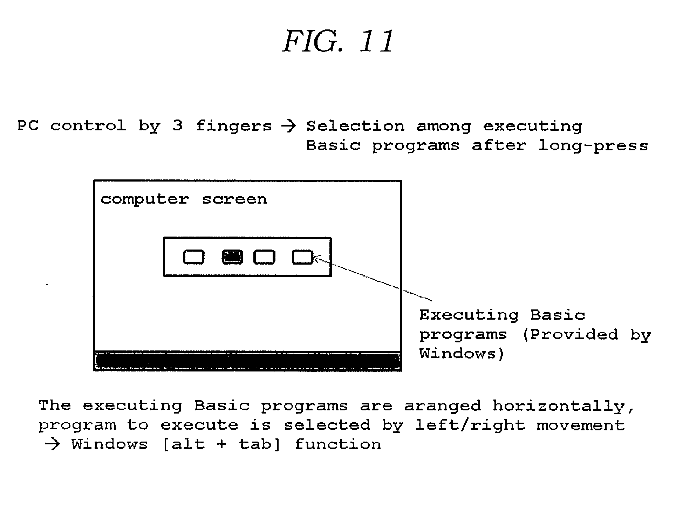

The special agent 25 is in charge of the application program control mode. When a specific event occurs while the general agent 25 operates a control mode, the general agent 25 hands over the analysis of the touch input to the special agent 25, and the application program control mode starts to execute the corresponding application program. The application program control mode will be described in more detail with reference to FIG. 11.

The GUI 27 corresponds to the entire graphic user interface of the computing unit 20, receives the processing result from the control module 24, converts the received processing result into screen information which may be effectively identified by a user, and displays a cursor movement, a mouse click, a pop-up window, and a screen movement on the screen. Furthermore, the GUI 27 provides a variety of graphic processing screens such that a user may easily select a control command through a touch operation. The graphic processing screens may display a basic program list, an application program installation list, a function icon, a character input direction, and so on.

FIG. 2 is a diagram showing operation examples in the respective control modes.

The general agent 22 is in charge of the cursor movement control mode, the screen control mode, the window control mode, the basic program control mode, and the character input control mode, and a user may freely select and use the respective control modes. In the application program control mode supported by the special agent 25, however, a separate function should be provided in such a manner that the application program 26 and the special agent 25 escape from the current application program control mode and the user moves to another control mode. This is because, once the special agent 25 is driven, the special agent 25 blocks the intervention of other controllers and entirely analyzes a user's touch input.

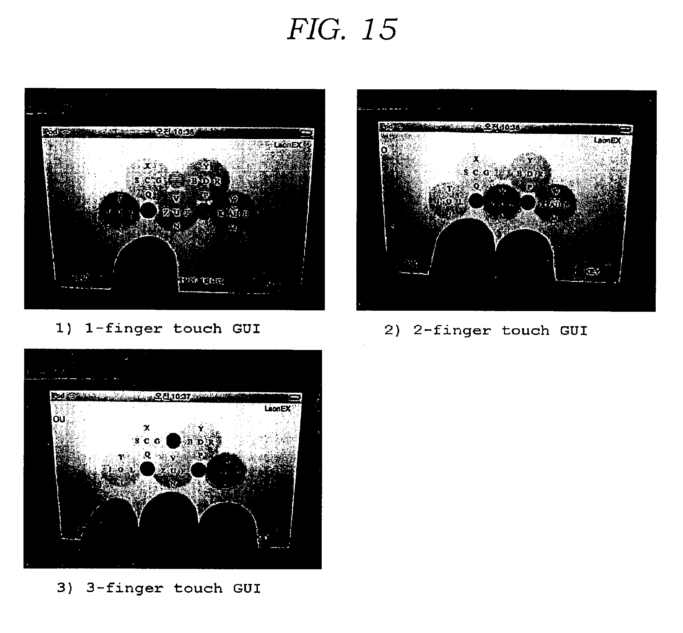

FIG. 2 shows four control modes provided by the general agent 22. In FIG. 2, the cursor movement control mode may be set by a one-finger touch, the screen control mode may be set by a two-finger touch, the basic program control mode may be set by a three-finger touch, and the character input control mode may be set by a four-finger touch. The reference values of simultaneous touch recognition for the respective control modes may be set in different manners. However, it is desirable that the character input control mode is set by a four-finger touch. This will be described below in detail with reference to FIG. 15.

A user may freely select and use the cursor movement control mode, the screen control mode, and the basic program control mode while switching over from one control mode to another control mode. That is, the general agent 22 changes the control mode in real time according to the number of touch points which are inputted at the same time, and analyzes the touch input to generate a control signal.

In the case of the character input control mode, however, a one-point touch, a two-point touch, and a three-point touch may be all used during the character input process. Therefore, in order to prevent the control mode from being changed during the character input process, a separate control mode change method needs to be introduced.

When a predetermined number (hereinafter, referred to a fourth number) of touch points corresponding to the selection of the character input control mode reoccur in the character input control mode, the general agent 22 returns to the original state from the current character input control mode. In this original state, a user may select an arbitrary control mode. At this time, the fourth number does not necessarily mean that the number of touch points is four. For user's manipulation convenience, the number of touch points corresponding to the fourth number may be set to four, as shown in FIG. 2.

That is, when a user touches the touch input surface with four fingers while inputting a character in the character input control mode, the general agent 22 returns to the original state in which an arbitrary control mode may be selected. After that, when the user touches the touch input surface with one finger, two fingers, three fingers, or four fingers, the corresponding control mode is immediately executed.

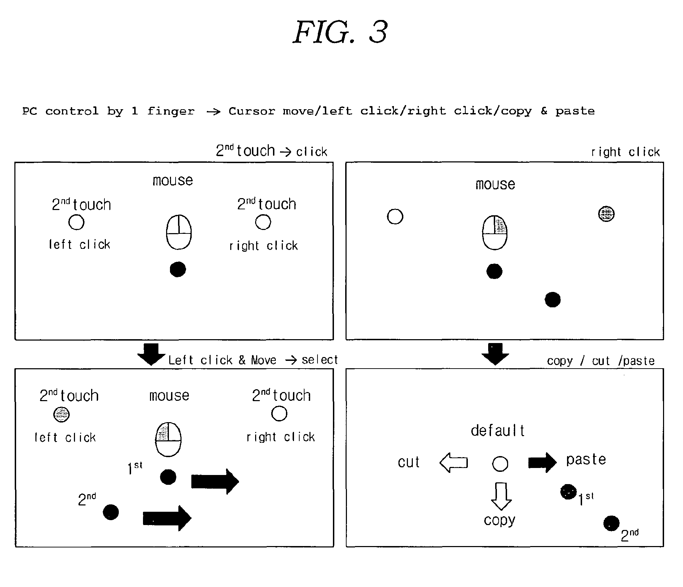

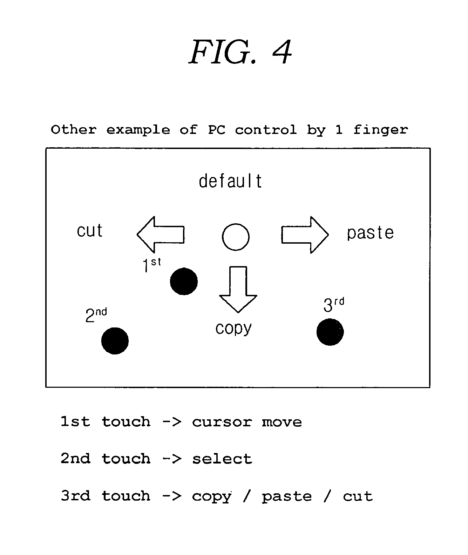

FIG. 3 is a diagram showing an operation example in which the cursor movement control mode is selected by a one-finger touch. In the cursor movement control mode, a cursor movement or mouse left/right click may occur. FIG. 4 is a diagram showing another operation example of the cursor movement control mode FIG. 3.

The cursor movement control mode includes control commands related to the cursor movement and the mouse left/right click.

When the number of touch points corresponds to a predetermined number (hereinafter, referred to as a first number), the general agent 22 sets the control mode to the cursor movement control mode. When a second touch occurs in the left or right side from the touch point corresponding to the first number, the general agent 22 recognize the second touch as a control command for the mouse left click or the mouse right click, and generates a corresponding control signal.

At this time, the first number does not necessarily mean that the number of touch points is one. For user's manipulation convenience, the number of touch points corresponding to the first number may be set to one as shown in FIG. 3.

That is, when a user touches the touch input surface 11 with one finger, the general agent 22 recognizes the touch as a command for setting the cursor movement control mode. Then, when the user moves the touch point, the cursor is moved to the touch point and displayed. Furthermore, when the user additionally touches the left or right side of the touch point, the general agent 22 recognizes the touch as a mouse left clock or right click.

In general, a mouse left click is recognized as a selection command for the corresponding click point. In FIG. 3, when a user touches the touch input surface 11 and then moves the touch point, this operation is recognized as a selection command. Furthermore, a mouse right click is recognized as a command for activating a pop-up window through which various commands may be selected. In the right and lower side of FIG. 3, a graphic sign for selecting a copy, cut, or paste function depending on a movement direction is displayed on the screen in correspondence to the mouse right click.

Furthermore, as shown in FIG. 4, when an additional touch occurs in a state in which an object (icon, file, or folder) on the screen is selected by a mouse left click, a function of copying, cutting, or pasting the selected object may be selected depending on the movement direction of the touch point. At this time, the selection of the object does not need to be limited to the mouse left click, and may also be performed by (shift + arrow key) or one-point movement.

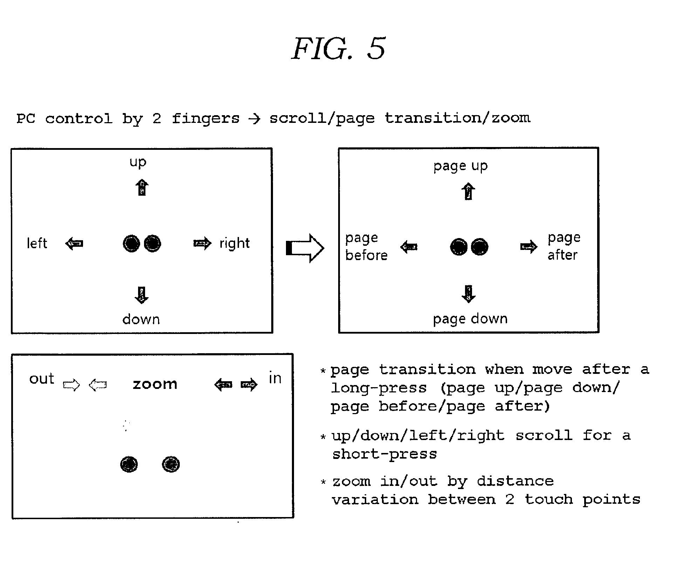

FIG. 5 is a diagram showing an operation example in which the screen control mode is selected by a two-finger touch. In the screen control mode, screen scroll, page transition, and screen zoom may be performed.

The screen control mode includes control commands related to the up/down and left/right scroll of a screen and the page transition.

When the number of touch points is a predetermined number (hereinafter, referred to as a second number), the general agent 22 sets the control mode to the screen control mode. Then, the general agent 22 selects any one of the screen scroll and the page transition depending on whether or not the touch state of the touch point is a long-press touch in the screen control mode, and generates a control signal according to a up/down or left/right movement of the touch point.

At this time, the second number does not necessarily mean that the number of touch points is two. For user's manipulation convenience, the number of touch points corresponding to the second number may be set to two as shown in FIG. 5.

For example, when a user simultaneously touches two points as shown in FIG. 5, this operation is recognized as an input for the screen scroll. Furthermore, when the touch state is maintained for a predetermined time, the touch is recognized as a long-press touch to perform the page transition.

In the case of the screen scroll, when a user moves the touch point in the upward/downward or left/right direction, the screen is moved in the upward/downward or left/right direction, as if the screen is moved in correspondence to an operation for moving a scroll bar.

In the case of the page transition, the screen is moved and displayed by the unit of page. That is, when a user moves a touch point in the upward/downward or left/right direction on a screen including several pages, the screen may be changed to the previous page or the next page.

In addition to the screen scroll and the page transition, the function of zooming in/out the screen may be carried out. As shown in FIG. 5, the screen may be zoomed in or out by changing the distance between two touch points.

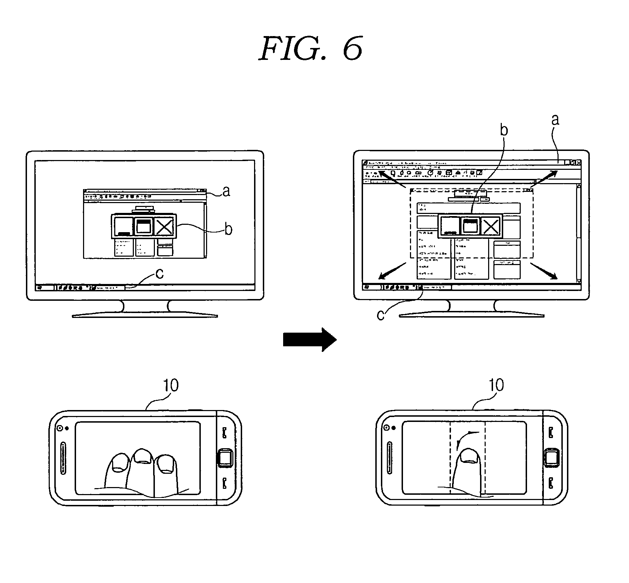

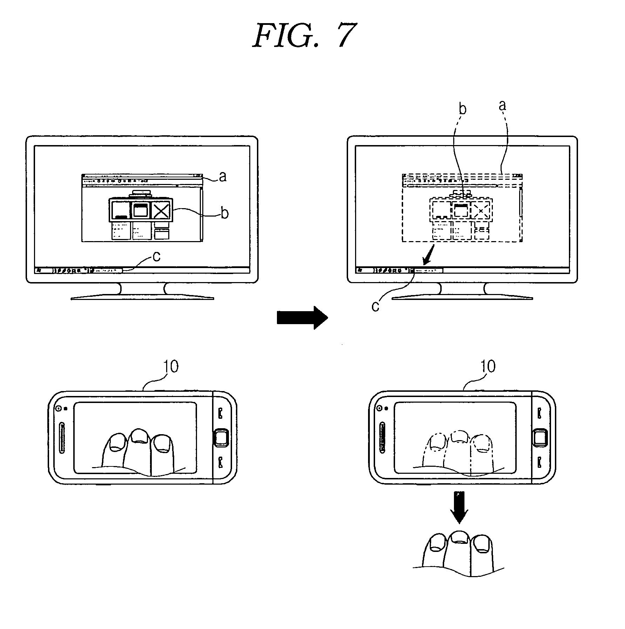

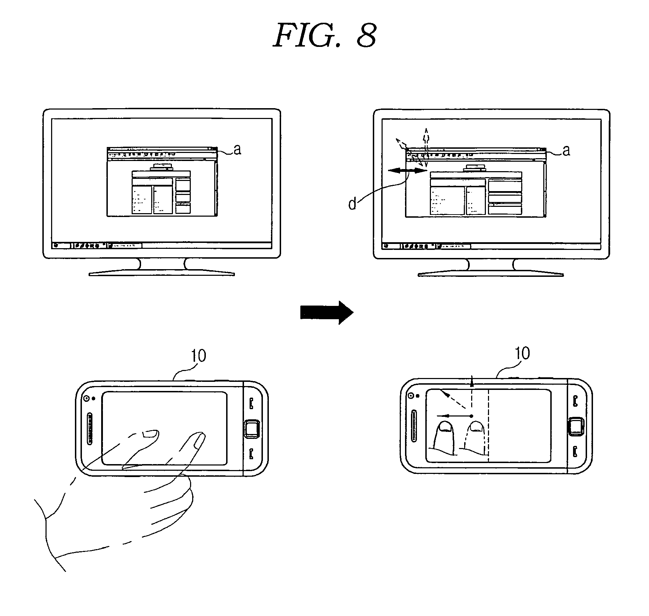

FIG. 6 is a diagram showing an operation example in which the window control mode is used to maximize the size of a window. The window control mode controls a window for displaying a screen on which a program is executed. FIG. 7 is a diagram showing an operation example in which the window control mode is used to minimize the size of the window. FIG. 8 is a diagram showing an operation example in which the window control mode is used to control the size of the window. For convenience of description, it is assumed that the window control mode agent is executed through a preset touch input or function key.

The window control mode includes a system menu control mode and a window size control mode. The system menu control mode controls a window 'a' through a system menu 'b' including a maximize button, a minimize button, and a close button of the window 'a' displaying a screen on which a program is executed, and the window size control mode controls the size of the window 'a'. For convenience of description, it is assumed that when a touch input corresponding to the third number is performed by a user, the system menu of the window is activated, and when a touch input corresponding to the second number is performed, a window size control object (arrow) for controlling the window size is activated.

When the number of touch points is a predetermined number, the general agent 22 sets the control mode to the window control mode, selects any one of the system menu control mode and the window size control mode depending on the number of touch points in the window control mode, and generates a control signal according to an input or movement of a subsequent touch point.

Referring to FIG. 6, when an additional touch input occurs on the maximize button of the window which is the second touch point, the corresponding control command is executed. As shown in FIG. 6, when a user touches three points at the same time, this operation is recognized as an input for the system menu control mode. In this state, the system menu 'b', in which the first touch point is matched with the minimize button of the window, the second touch point is matched with the maximize button of the window, and the third touch point is matched with the window close button, is outputted over the window 'a'. At this time, when a touch input for one of the three buttons additionally occurs in a state in which the system menu 'b' is outputted, a control command matched with the corresponding touch point is generated, and the result is displayed on the screen.

In this embodiment of the present invention, it has been described that when a touch input additionally occurs after the three touch points are all released, one button of the system menu is selected. Without being limited thereto, however, even when only one touch point among three touch points is maintained and the other two touch points are released, the maintained touch point may be recognized as an additional touch input, and a button of the system menu corresponding to the maintained touch point may be selected.

Referring to FIG. 7, when a user touches three points at the same time and then releases the touch input while moving the three touch points downward, this operation may be recognized as a window minimize control command of the system menu, and the corresponding control command may be executed.

Referring to FIG. 8, when a user touches two points at the same time, this operation is recognized as a touch input for the window size control mode to control the size for the window 'a'. In this state, an arrow 'd' indicating a direction for controlling the size of the window 'a' is outputted on the screen. At this time, the arrow 'd' indicating the direction for controlling the size of the window 'a' is outputted in the left or upward side from the center of the two points for the touch input to activate the window size control mode, when an additional touch input corresponding to the first number occurs in the left side from the center. Furthermore, the arrow 'd' is outputted in the right or downward side from the center of the two points, when an additional touch input corresponding to the first number occurs in the right side from the center. FIG. 8 shows a case in which the additional touch input occurs in the left side of the center. When the additional touch input made by the user is horizontally dragged in the left direction, the size of the window 'a' is increased in the left direction. Furthermore, when the additional touch input is dragged in the vertical or diagonal direction, the size of the window 'a' is controlled in the vertical or diagonal direction. When an additional touch input occurs in the right side from the center, the size of the window 'a' is controlled in a similar manner to when the additional touch input occurs in the left side from the center.

In this embodiment of the present invention, it has been described that one button of the system menu is selected by an additional touch input after the touch for two points is released. Without being limited thereto, however, even when only one touch point of the two points is maintained and the other touch point is released, the maintained touch point may be recognized as an additional touch input, and the button of the system menu corresponding to the maintained touch point may be selected.

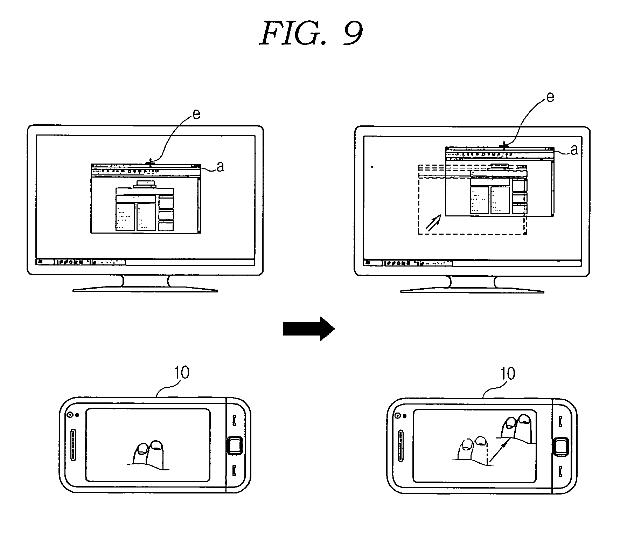

FIG. 9 is a diagram showing an operation example in which a window displaying a screen on which a program is being executed is moved along a touch input.

Referring to FIG. 9, when a user performs a touch input corresponding to the second number in the window size control mode, the control mode 24 recognizes the touch input as a touch input for the window movement control mode to move the position of the window 'a', and outputs a four-direction arrow 'e' indicating that the window may be moved. At this time, referring to FIG. 9, when the user performs an additional touch input corresponding to the second number and moves the touch point in a specific direction, the window 'a' is moved in the same direction as the specific direction.

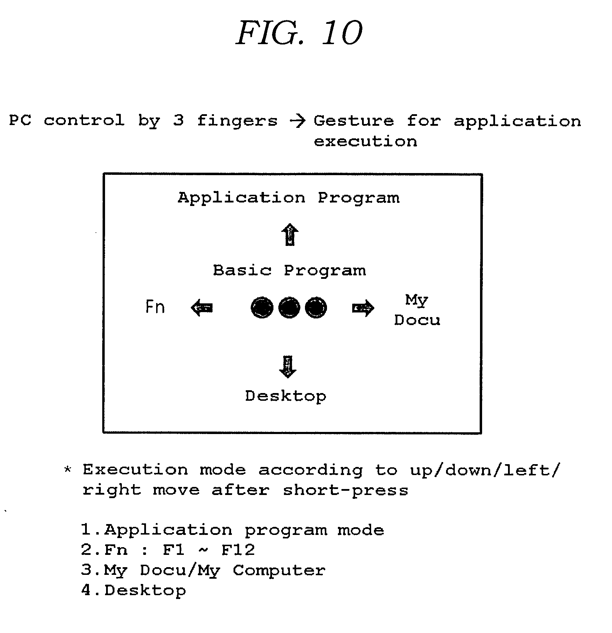

FIG. 10 is a diagram showing an operation example in which the basic program control mode is selected by a three-finger touch. The basic program control mode executes basic programs provided by the OS.

The basic program control mode includes control command related to the execution of the basic programs provided by the OS of the computing unit 20. That is, programs such as My Document, desktop, or My Computer may be executed, and various function keys may be defined in the basic program control mode. Furthermore, the basic program control mode may provide a method for entering the application program control mode. The execution of the respective programs and functions may be previously set in such a manner that the programs and functions correspond to the movement directions of touch points.

When the number of touch points corresponds to a predetermined number (hereinafter, referred to a third number), the general agent 22 sets the control mode to the basic program control mode. Then, when the touch points are moved, the general agent 22 generates a control signal corresponding to a control command for executing a predefined basic program in correspondence to the preset movement direction.

At this time, the third number does not necessarily mean that the number of touch points is three. For user's manipulation convenience, however, the number of touch points may be set to three as shown in FIG. 3.

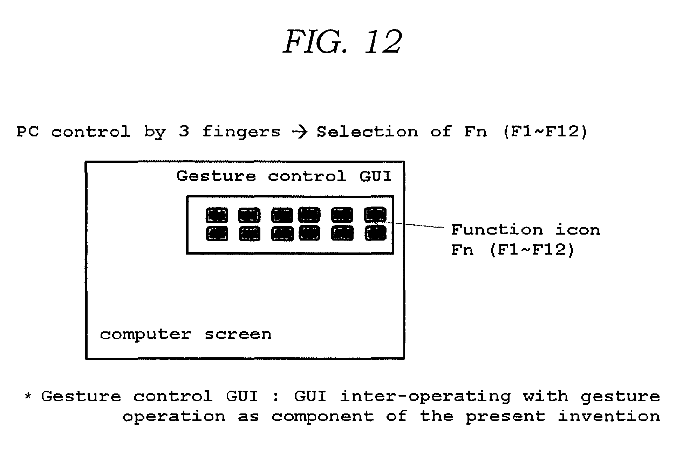

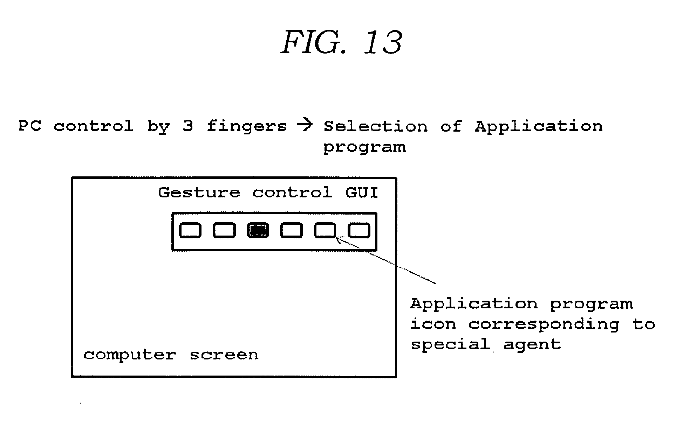

FIG. 10 shows a case in which when a user touches three points and then drags the touch points in the right direction, the My Document folder is opened and displayed, and when the user drags the touch points in the downward direction, the desktop is displayed. Furthermore, when the user drags the touch points in the left direction, a screen for function keys is displayed. This will be described below in detail with reference to FIG. 12. Furthermore, when the user drags the touch points in the upward direction, the user may enter the application program mode. This will be described below in detail with reference to FIG. 13.

FIG. 11 is a diagram showing an operation example in which a list of basic programs which are being executed is displayed by a long-press touch and a basic program is selected by a touch movement and release operation.

When a long press touch corresponding to the third number is detected, the general agent 22 displays a list of currently-executing basic programs on the screen. Then, the general agent 22 displays one of the basic programs in the list as a point. When the touch point is moved, the general agent 22 moves the point in correspondence to the movement of the touch point such that the user may select another basic program.

When the touch is separated, the basic program indicated by the point is selected and executed. This operation exhibits the same effect as the function of Alt-Tab keys.

FIG. 12 is a diagram showing an operation example in which a window for selecting functions defined in function keys F1 to F12 is displayed when the touch points are dragged in the left direction of FIG. 10.

When the touch points corresponding to the third number are moved in the left direction, the general agent 22 displays function icons for performing functions defined in the respective function keys F1 to F12 on the screen. After that, when the user moves the touch to select one of the function icons and releases the touch, the corresponding function key is executed. That is, the general agent 22 generates a control signal for a control command of the corresponding function key and provides the generated control signal to the control module 24.

The functions defined in respective function keys may be set as default values or may be arbitrarily set by a user.

FIG. 13 is a diagram showing an operation example in which one of currently-installed application programs is selected and executed to enter the application program control mode, when the touch points are dragged in the upward direction of FIG. 10.

The application program control mode includes control commands which are defined by the application programs. Different application program control modes may be set for the respective application programs.

When the touch points are moved in a specific direction in the basic program control mode, the general agent 22 displays an application program installation list on the screen. This operation corresponds to an operation which is performed when the touch points are moved in the upward direction of FIG. 10. The application program installation list includes the application programs provided in the computing unit 20.

Then, when the user moves the touch points, the general agent 22 moves and displays a point indicating an application program to be selected from the list. When the touch points are separated, the general agent 22 selects and executes the application program indicated by the point, and sets the control mode to the application program control mode. Simultaneously, the general agent 22 searches for a special agent 25 corresponding to the selected application program, and drives the special agent 25.

The special agent 25 includes information on the touch operation which is previously defined in correspondence to the control command of the application program 26. Therefore, once the application program 26 is selected and the special agent 25 corresponding to the selected application program 26 is driven, touch information inputted through the transmission interface 21 is analyzed according to the touch operation defined in the special agent 25. Then, the special agent 25 determines the control command of the application program, generates a corresponding control signal, and provides the generated control signal to the control module 24.

For example, when the application program 26 and the corresponding special agent 25 are related to a specific game, the entire system according to the embodiment of the present invention may be used as a dedicated game machine under the corresponding application program control mode.

Therefore, in order to escape from the application program control mode, a function of escaping from or terminating the application program needs to be provided in the application program. Furthermore, it is desirable that the intervention of the general agent 22 is not allowed during the application program control mode, as long as an external function such as forcible termination is not used. When the user escapes from the application program control mode, the general agent 22 resumes analyzing touch operations.

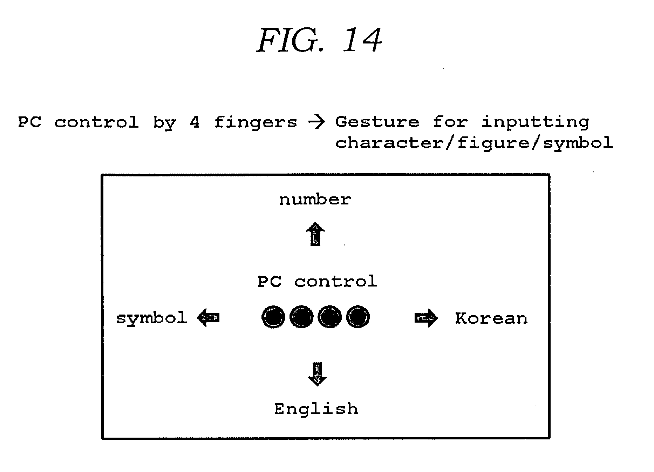

FIG. 14 is a diagram showing an operation example in which the character input control mode is selected by a four-finger touch. In the character input control mode, characters, numbers, and symbols may be inputted. FIG. 15 is a diagram showing operation examples in which alphabets are selected by touch operations using three fingers after English is selected in the character input control mode of FIG. 14.

The character input control mode includes commands related to character input.

When the number of touch points corresponds to a predetermined number (hereinafter, referred to as fourth number), the general agent 22 sets the control mode to the character input control mode. Furthermore, the general agent 22 selects the language type of an input character in correspondence to the upward/downward or left/right movement of the touch points in the character input control mode, recognizes an input of individual characters according to predetermined types of touch operations and a character table, and generates the corresponding control signal.

At this time, the fourth number does not necessarily mean that the number of touch points is four. For user's manipulation convenience, the number of touch points corresponding to the fourth number may be set to four, as shown in FIG. 13. The character input requires combinations of various numbers of cases. Therefore, when the operation for entering the character input control mode is set to the four-finger touch, a one-finger touch, a two-finger touch, and a three-finger touch may be assigned to the touch operations related to the character input. In this case, the character input may be performed in various manners.

For example, when a user touches the touch input surface with four fingers and then moves the touch, the English input may be selected. Then, a user interface through which all the alphabets may be selected within the range of the three-finger touch is displayed as shown in FIG. 15.

Furthermore, when the user performs an additional four-finger touch as described above with reference to FIG. 2, the user escapes from the character input control modes and returns to the original state in which an arbitrary control mode may be selected.

FIG. 15 shows an example in which the character input interface is applied to the touch screen. In the case of a touch pad having no display function, a user interface may be displayed through a monitor screen separated from the touch pad.

A method for inputting characters, numbers, and symbols in the character input control mode has been applied on July 6, 2009 by the applicant of the present application (refer to Korean Patent Laid-open Publication No. 10-2009-0061297). The method disclosed in the patent document may be applied to the embodiment of the present invention. Therefore, details of the character input method will be understood with reference to the patent document, and thus the description of the character input method will be omitted.

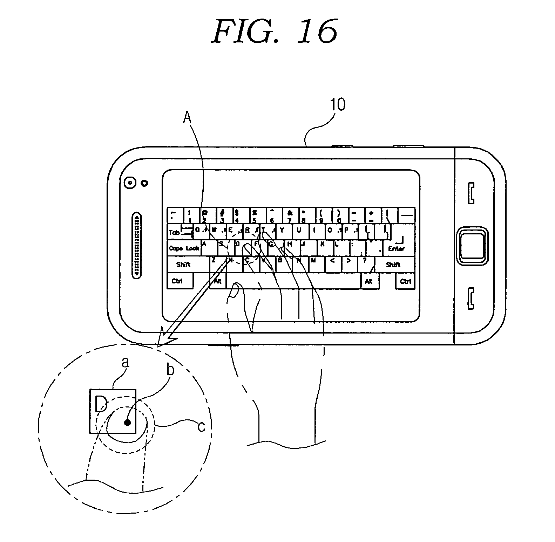

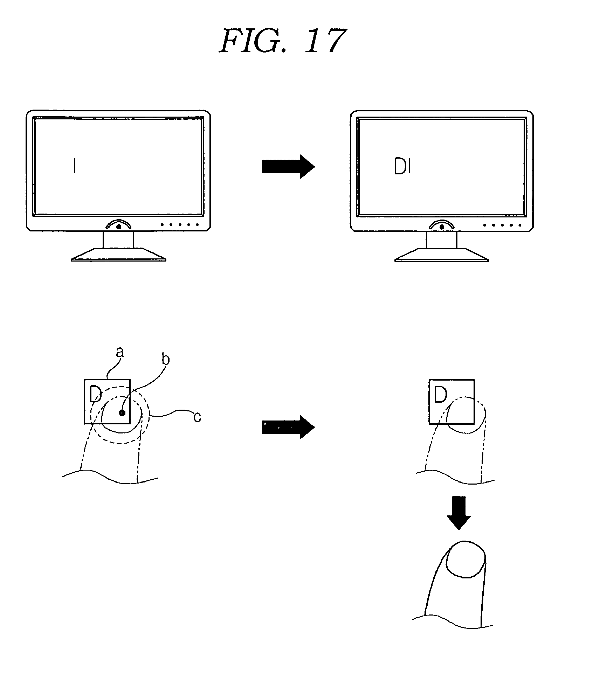

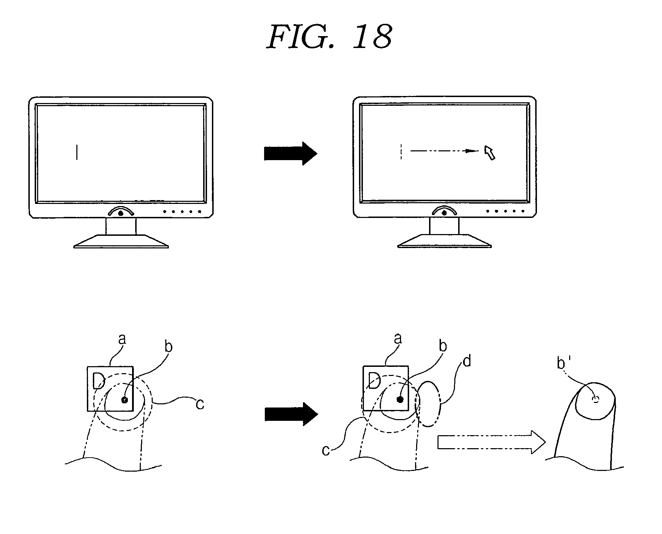

FIG. 16 is a diagram showing a state in which a touch is inputted to the touch input unit. FIG. 17 is a diagram showing a process in which a keyboard input is performed through a touch input. FIG. 18 is a diagram showing a process in which a mouse input is performed through a touch input.

Referring to FIG. 16, a user activates the character input control mode through a key input for activating the character input control mode, and touches a specific key of a character input interface with a finger. The character input interface is displayed in the form of a keyboard on the touch input unit 10. For convenience of description, it is assumed that the user touches a character key 'D' of a region 'A' with a finger. At this time, a touch point 'b' of the touch input unit 10 with which the finger is actually contacted should be positioned within a region 'a' which is a character recognition range of the character 'D'. Then, the control module 24 may recognize that the touch point is positioned at the character key 'D'. Furthermore, only when the touch point 'b' of the finger is moved within the predetermined character input permission range without touch release, the input recognition of the character 'D' is allowed. At this time, the touch information including the coordinates of the touch point 'b' which the user touches with the finger through the touch input unit 10 is transmitted to the computing unit 20.

Referring to FIG. 17, when the user touches the character recognition region 'a' with a finger and then releases the touch input by taking the finger off the touch input unit 10, the control module 131 determines that the character 'D' is touch-inputted, and outputs the character 'D' on the screen. At this time, the touch input unit 10 transmits the touch information to the computing unit 20, the touch information including the coordinates which are changed when the touch input of the finger is released from the character recognition region 'a'. Furthermore, the control module 24 confirms that the touch input is released from the character recognition region 'a' having indicated the character 'D', determines that the character 'D' is finally inputted by the user, and outputs the character 'D' on the screen.

Referring to FIG. 18, when the user touches the character recognition region 'a' with a finger and moves the touch point 'b' to the outside of the character input permission range 'c' without releasing the touch input, the control module 24 recognizes the touch point 'b' as a mouse input from a point 'd' where the touch point 'b' leaves the character input permission range 'c', and moves the mouse cursor displayed on the screen, as the touch point 'b' is moved to a new touch point 'b". At this time, the touch input unit 10 transmits the touch information changed by the movement of the touch input from the character recognition region 'a' to the computing unit 20, and the control module 24 confirms that the touch input leaves the character input permission range 'c' having indicated the character 'D', determines that the mouse input is carried out by the user, and moves the mouse cursor displayed on the screen according to the coordinate change of the touch point.

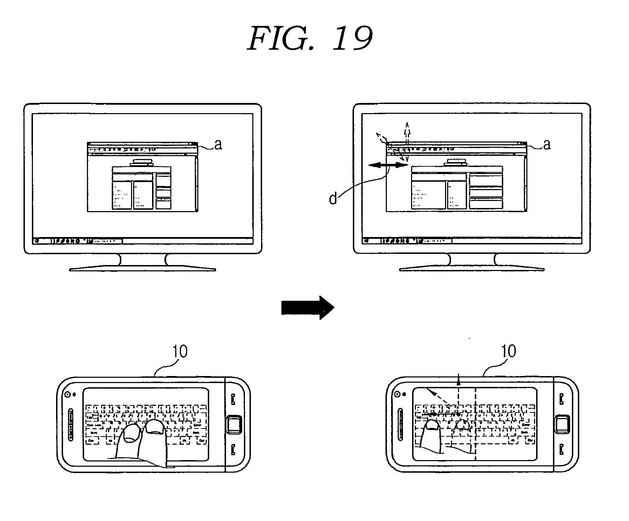

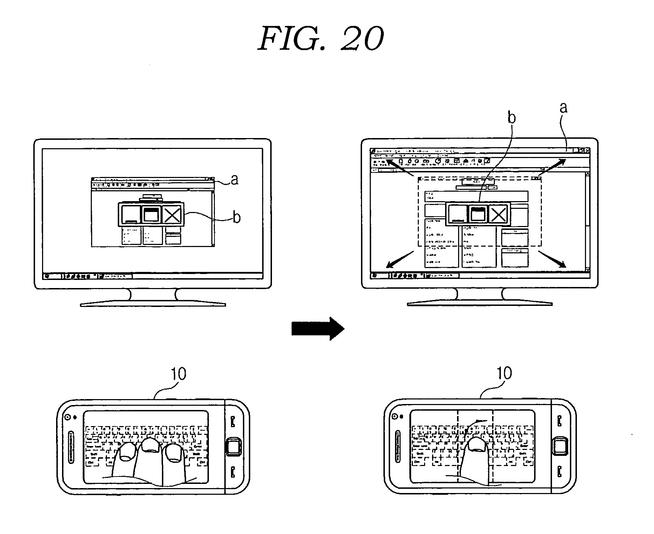

FIG. 19 is a diagram showing a case in which a touch input corresponding to the second number occurs on the character input interface. FIG. 20 is a diagram showing a case in which a touch input corresponding to the third number occurs on the character input interface.

Referring to FIG. 19, when a user performs a touch input corresponding to the second number in the character input control mode for inputting a character through the character input interface, the control module 24 recognizes the touch input, which is additionally performed on the character input interface, as a touch input for the window size control mode as described with reference to FIG. 8, and generates a control signal according to an additional touch input corresponding to the first number. An operation which will be performed after the control module 24 recognizes the touch input as the touch input for the window size control mode has been already described with reference to FIG. 8, and thus the detailed descriptions thereof will be omitted. Although not shown in the drawing, a touch input corresponding to the second number may occur in the state in which the control mode is recognized as the window size control mode. In this case, the control module 24 recognizes the touch input as a touch input for the window movement control mode, and generates a control signal according to an additional touch input corresponding to the second number.

Referring to FIG. 20, when a touch input corresponding to the third number occurs in the character input control mode for inputting a character through the character input interface, the control module 24 recognizes the touch input, which is additionally performed on the character input interface, as a touch input for the system menu control mode as described with reference to FIGS. 6 and 7, and generates a control signal according to an additional touch input corresponding to the first number. Here, an operation which will be performed after the control module 24 recognizes the touch input as the touch input for the system menu control mode has been already described with reference to FIGS. 6 and 7, and thus the detailed descriptions thereof will be omitted.

While the present invention has been described with respect to the specific embodiments, it will be apparent to those skilled in the art that various changes and modifications may be made without departing from the spirit and scope of the invention as defined in the following claims.

## Claims

1. A multi-touch input control system comprising:
a touch input unit having a multi-touch-type touch input surface which recognizes one or more touch points at the same time, generating the coordinates of one or more touch points inputted through the touch input surface, and transmitting touch information containing the coordinate information; and
a computing unit receiving the touch information from the touch input unit, setting one of preset control modes according to the number of touch points, selecting a control command among control commands contained in the set control mode in correspondence to a variation in the number of touch points and a coordinate variation, and generating a control signal corresponding to the control command to performing internal control processing.

2. The multi-touch input control system of claim 1, wherein the computing unit comprises:
a transmission interface forming an information transmission path between the touch input unit and the computing unit according to any one standard of wired transmission, wireless transmission, and data input and output through an internal line;
a general agent having information on the control modes containing one or more control commands, receiving the touch information of the touch input unit through the transmission interface, determining the number of touch points from the touch information, selecting one of the control modes according to the number of touch points, and generating a control signal corresponding to a control command contained in the selected control mode according to the variation in the number of touch points and the coordinate variation; and
a control module receiving the control signal from the general agent, performing internal control processing, and displaying the processing result on a screen.

3. The multi-touch input control system of claim 2, wherein the control mode comprises a cursor movement control mode containing control commands related to a cursor movement and a mouse left/right click,
when the number of touch points is a predetermined number (hereinafter, referred to a first number), the general agent sets the control mode to the cursor movement control mode, and
when a touch point additionally occurs in the left or right side from the touch points in the cursor movement control mode, the general agent recognizes the touch as a control command of the mouse left or right click, and generates a corresponding control signal.

4. The multi-touch input control system of claim 3, wherein when a touch point additionally occurs in a state in which an object on the screen is selected, the general agent generates a control signal corresponding to a control command for copying, cutting, or pasting the selected object according to the movement direction of the touch point.

5. The multi-touch input control system of claim 2, wherein the control mode comprises a screen control mode containing control commands related to upward/downward or left/right screen scroll and page transition,
when the number of touch points is a predetermined number (hereinafter, referred to as a second number), the general agent sets the control mode to a screen control mode, detects a state in which the touch state of the touch points is maintained in a limited range for a predetermined time in the screen control mode (hereafter, referred to as a long-press touch), and selects any one of the screen scroll and the page transition depending on when the long-press touch occurs or not, and
when the touch points are moved in the upward/downward or left/right direction, the general agent recognizes the movement as a control command for the selected one of the screen scroll and the page transition, and generates a corresponding control signal.

6. The multi-touch input control system of claim 2, wherein the control mode comprises a character input control mode containing commands related to character input,
when the number of touch points is a predetermined number (hereafter, referred to as a fourth number), the general agent sets the control mode to a character input control mode, selects the language type of input characters in correspondence to an upward/downward or left/right movement of the touch points in the character input control mode, recognizes inputs of individual characters according to predefined types of touch operations and a character table, and generates a corresponding control signal, and
when an additional touch corresponding to the fourth number occurs in the character input control mode, the control mode returns to the initial state in which an arbitrary control mode is selected.

7. The multi-touch input control system of any one of claims 2 to 6, wherein the control mode comprises a basic program control mode to execute basic programs provided by an operating system, and
when the number of touch points is a predetermined number (hereinafter, referred to as a third number), the general agent sets the control mode to the basic program control mode, and generates a control signal corresponding to a control command for executing a predefined basic program in correspondence to a movement direction of the touch in the basic program control mode.

8. The multi-touch input control system of claim 7, wherein when a long-press touch corresponding to the third number is detected in the basic program control mode, the general agent displays a list of currently-executing basic programs on the screen, moves a basic program to be selected from the basic program list in correspondence to a movement of the touch points, and
when the touch is separated, the currently-selected basic program is executed.

9. The multi-touch input control system of claim 2, wherein the control mode comprises a window control mode containing commands for controlling a window displaying a screen on which a program is executed,
when the number of touch points is a predetermined number, the general agent sets the control mode to the window control mode,
when a touch corresponding to the third number is inputted, the general agent displays a minimize button, a maximize button, and a close button which are matched with the touch corresponding to the third number and are the system menu of the window, and
when one button in the system menu of the window is selected by an additional touch input, the general agent generates a control signal corresponding to the selected button.

10. The multi-touch input control system of claim 9, wherein when the touch corresponding to the third number is moved downward in a state in which the system menu of the window is displayed, the general agent moves the window to a taskbar.

11. The multi-touch input control system of claim 9 or 10, wherein when a touch corresponding to the second number is inputted, the general agent sets the control mode to a window size control mode for controlling the size of the window, and
when an additional touch corresponding to the first number is inputted, the general agent generates a control signal to control the size of the window.

12. The multi-touch input control system of claim 11, wherein when a touch corresponding to the second number additionally occurs in the window size control mode, the general agent sets the control mode to a window movement control mode for moving the position of the window, and
as the position of the additional touch input corresponding to the second number is moved, the general agent generates a control signal to move the position of the window.

13. The multi-touch input control system of claim 12, wherein when only one of the touch points for setting the window control mode is maintained and the other touch points are released, the general agent recognizes the maintained touch point as a touch input which additionally occurs.

14. The multi-touch input control system of claim 2, wherein the control modes comprise a character input control mode for inputting a character through a character input interface displayed on the touch input unit, and
the general agent generates a control signal to move a mouse cursor from a position at which the touch point leaves a character input permission range within a character recognition region.

15. The multi-touch input control system of claim 14, wherein when the touch input is released within the character recognition region, the general agent generates a control signal to output a character matched with the character recognition region.

16. The multi-touch input control system of claim 15, wherein the character recognition region comprises an input range which is previously set in such a manner that when one of characters displayed on the character input interface is touched, the character selected by the touch input is recognized.

17. The multi-touch input control system of claim 16, wherein the character input permission range comprises a range which is previously set in such a manner that when the touch performed in the character recognition region is moved, the movement is recognized as a normal character input.

18. The multi-touch input control system of claim 14, wherein when a touch corresponding to the second number is inputted, the general agent sets the control mode to a window size control mode for controlling the size of the window, and
as a touch corresponding to the first number is additionally inputted, the general agent generates a control signal to control the size of the window.

19. The multi-touch input control system of claim 18, wherein when a touch corresponding to the second number is additionally inputted in the window size control mode, the general agent sets the control mode to a window movement control mode for moving the position of the window, and
as the position of the touch corresponding to the second number is moved, the general agent generates a control signal to move the position of the window.

20. The multi-touch input control system of claim 14, wherein when a touch corresponding to the third number is inputted in the character input control mode, the general agent displays a minimize button, a maximize button, and a close button which are matched with the touch corresponding to the third number and are the system menu of the window, and
when one button in the system menu of the window is selected by an additional touch input, the general agent generates a control signal corresponding to the selected button.

21. The multi-touch input control system of claim 20, wherein when only one of the touch points for setting the window control mode is maintained and the other touch points are released, the general agent recognizes the maintained touch point as a touch input which additionally occurs.

22. The multi-touch input control system of claim 20, wherein when the touch corresponding to the third number is moved downward in a state in which the system menu of the window is displayed, the general agent moves the window to a taskbar.

23. The multi-touch input control system of claim 8, wherein the computing unit comprises:
one or more application programs individually added and having one or more control commands which are defined thereby; and
one or more special agents individually added in correspondence to the application programs, having information on predefined touch operations in correspondence to the control commands of the application programs, receiving the touch information of the touch input unit through the transmission interface when driven by the general agent, analyzing the received touch information, generating a control signal corresponding to the control command of the application program, and providing the generated control signal to the control module,
when the touch point is moved in a specific direction in the basic program control mode, the general agent displays an application program installation list including the application programs provided in the computing unit, moves an application program to be selected from the application program installation list in correspondence to the movement of the touch point, and
when the touch point is separated, the general agent executes the selected application program, sets the control mode to the application program control mode, and drives a special agent corresponding to the selected application program among the special agents.

24. The multi-touch input control system of claim 23, wherein when the touch point is moved downward in the basic program control mode, the general agent displays a desktop provided by an operating system of the computing unit.
